# EUROPÄISCHE PATENTANMELDUNG

(11) **EP 4 465 393 A1**
(43) Veröffentlichungstag der Anmeldung: **20.11.2024**
(21) Anmeldenummer: 23173268.6
(22) Anmeldetag: 13.05.2023
(51) Int. Cl.: H01M 10/04, H01M 50/109, H01M 50/153, H01M 50/186, H01M 50/188, H01M 50/536, H01M 50/545, H01M 50/566

(54) **ELEKTROCHEMISCHE KNOPFZELLE UND VERFAHREN ZUR HERSTELLUNG**

(71) Anmelder: VARTA Microbattery GmbH, 73479 Ellwangen Jagst (DE)
(72) Erfinder: Gaugler, Winfried, 73479 Ellwangen (DE)
(74) Vertreter: Ostertag & Partner Patentanwälte mbB

(57) **Zusammenfassung**

Eine elektrochemische Energiespeicherzelle in Form einer Knopfzelle (10; 20) umfasst ein verschlossenes Gehäuse (100) und einen darin angeordneten Elektroden-Separator-Verbund (140). Das Gehäuse umfasst ein metallisches, becherförmig ausgebildetes Gehäuseteil (110) mit einem Gehäusebecherboden (101) und einen Deckel (120), die jeweils eine Innenseite und eine Außenseite aufweisen. Der Elektroden-Separator-Verbund (140) liegt in Form eines zylindrischen Wickels vor. Der Elektroden-Separator-Verbund (140) umfasst eine bandförmige Anode (142) mit einem Anodenstromkollektor und eine bandförmige Kathode (141) mit einem Kathodenstromkollektor. Der Anodenstromkollektor umfasst einen Hauptbereich, der mit einer Schicht aus negativem Elektrodenmaterial beladen ist, sowie einen freien Randstreifen, der sich entlang eines ersten Längsrands erstreckt und der nicht mit dem Elektrodenmaterial beladen ist, und/oder der Kathodenstromkollektor umfasst einen Hauptbereich, der mit einer Schicht aus positivem Elektrodenmaterial beladen ist, sowie einen freien Randstreifen, der sich entlang eines ersten Längsrands erstreckt und der nicht mit dem Elektrodenmaterial beladen ist. Die Anode (142) und die Kathode (141) sind innerhalb des Elektroden-Separator-Verbunds (140) derart angeordnet, dass der erste Längsrand des Anodenstromkollektors aus der einen endständigen Stirnseite und/oder der erste Längsrand des Kathodenstromkollektors aus der anderen endständigen Stirnseite des Elektroden-Separator-Verbunds (140) austritt. Der erste Längsrand des Anodenstromkollektors oder der erste Längsrand des Kathodenstromkollektors liegt unmittelbar an der Innenseite des Gehäusebecherbodens (101) oder an der Innenseite des Deckels (120) an. Weiterhin weist der Gehäusebecherboden (101) und/oder der Deckel (120) mindestens einen vorspringenden Bereich (11, 12) auf, in dem der Gehäusebecherboden oder der Deckel eine in den Innenraum weisende Deformation aufweist oder in dem eine Erhebung des Gehäusebecherbodens oder des Deckels in den Innenraum ragt. Der an der Innenseite des Gehäusebecherbodens (101) oder des Deckels (120) anliegende erste Längsrand des Anodenstromkollektors oder des Kathodenstromkollektors ist an die Deformation oder an die Erhebung geschweißt.

## Beschreibung

Die vorliegende Erfindung betrifft eine elektrochemische Energiespeicherzelle in Form einer Knopfzelle sowie ein Verfahren zu ihrer Herstellung.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten in der Regel auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoOz), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, insbesondere eine metallische Folie, der als Träger für das jeweilige Aktivmaterial bzw. das entsprechende Elektrodenmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-lonen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden können bei der Herstellung einer Lithium-Ionen-Zelle mit einem oder mehreren Separatoren zu einem Elektroden-Separator-Verbund kombiniert werden. Hierbei können die Elektroden und Separatoren unter Druck oder auch durch Lamination oder durch Verklebung miteinander verbunden werden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Beispielsweise wird eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im anderen Fällen werden zunächst eine bandförmige positive Elektrode und eine bandförmige negative Elektrode sowie mindestens ein bandförmiger Separator zu einem Elektroden-Separator-Verbund kombiniert, beispielsweise unter Anwendung des erwähnten Drucks. In einem weiteren Schritt wird der Verbund aufgewickelt und der so gebildete wickelförmige Elektroden-Separator-Verbund in ein Gehäuse eingebracht und die Elektroden entsprechend kontaktiert.

Derartige Energiespeicherzellen mit einem gewickelten Elektroden-Separator-Verbund weisen meist eine zylindrische Bauform auf. Hierbei werden Rundzellen und Knopfzellen voneinander unterschieden. Zylindrische Rundzellen zeichnen sich dadurch aus, dass ihre Höhe größer als ihr Durchmesser ist. Knopfzellen weisen eine Höhe auf, die kleiner als ihr Durchmesser ist. Knopfzellen in der Regel sehr viel kleiner dimensioniert als Rundzellen. Sie eignen sich beispielsweise zur Versorgung von kleinen elektronischen Geräten wie Uhren, Hörgeräten, kabellosen Kopfhörern oder Ähnlichem.

Derartige Energiespeicherzellen mit einem gewickelten Elektroden-Separator-Verbund weisen meist eine zylindrische Grundform auf. Hierbei werden zylindrische Rundzellen und Knopfzellen voneinander unterschieden. Zylindrische Rundzellen zeichnen sich dadurch aus, dass ihre Höhe größer als ihr Durchmesser ist. Knopfzellen hingegen weisen eine Höhe auf, die kleiner als der Durchmesser ist. Knopfzellen werden zum Teil in sehr kleinen Bauformen angeboten. Sie eignen sich beispielsweise zur Versorgung von kleinen elektronischen Geräten wie Uhren, Hörgeräte, kabellose Kopfhörer oder Ähnliches.

Knopfzellen weisen üblicherweise ein Gehäuse aus zwei metallischen Gehäuseteilen auf. Beispielweise ist das eine Gehäuseteil becherförmig ausgebildet (der sogenannte Zellenbecher) während das andere als Deckel die Öffnung des becherförmigen Gehäuseteils verschließt. Oftmals ist auch der Deckel becher- oder napfförmig ausgebildet und mit seinem Öffnungsrand voran in den Zellenbecher eingeschoben.

Der flüssigkeitsdichte Verschluss erfolgt bei solchen Knopfzellen beispielsweise durch ein Umbördeln des Rands des Zellenbechers über einen Rand oder eine Schulter oder umlaufende Kante des Deckels, wobei zwischen Zellenbecher und Deckel ein Kunststoffring angeordnet ist, der vom Rand des Zellenbechers gegen die Schulter oder den Rand oder die umlaufenden Kante des Deckels gepresst wird. Dieser Kunststoffring dient zum einen als Dichtungselement, zum anderen isoliert es den Zellenbecher elektrisch gegen den Deckel.

Alternativ kann ein Verschluss von Knopfzellen auch bewirkt werden, indem der Zellenbecher und der Deckel in axialer Richtung ausschließlich oder zumindest primär durch eine kraftschlüssige Verbindung zusammengehalten werden, so dass auf eine Bördelung verzichtet werden kann. Eine solche Knopfzelle ist beispielsweise aus der DE 10 2009 017 514 A1 bekannt.

Bei Knopfzellen mit metallischen Gehäuseteilen fungieren die Gehäuseteile meist auch als Pole der Zellen. Sie müssen daher elektrisch mit den Elektroden verbunden werden. Die Kontaktierung der positiven und der negativen Elektrode mit den Gehäuseteilen kann derart erfolgen, dass an den Elektrodenbändern ein Ableiterstreifen angebracht wird. Der Ableiterstreifen der positiven Elektrode ragt auf einer Stirnseite des Wickels heraus und der Ableiterstreifen der negativen Elektrode ragt aus der gegenüberliegenden Stirnseite des Wickels heraus. Diese Ableiterstreifen können durch Verschweißung mit den jeweiligen Gehäuseteilen verbunden werden, um die Elektroden elektrisch zu kontaktieren. Eine derartige Knopfzelle geht beispielsweise aus der DE 10 2009 060 800 A1 hervor.

In der JP 2008-262825 A wird eine sekundäre Knopfzelle mit bandförmigen Elektroden und einem bandförmigen Separator, die zu einem zylindrischen Wickel geformt sind, beschrieben. Auf den jeweiligen Stirnseiten des Wickels ist eine elektrisch isolierende Platte angeordnet, die die Stirnseiten vor einem Kontakt mit dem Gehäuse schützt. Das Gehäuse besteht aus einem becherförmigen Gehäuseteil und einem Deckel, wobei der Deckel in die Öffnung des becherförmigen Gehäuseteils eingeschweißt ist. Eine der Elektroden des Wickels ist über einen metallischen Ableiter mit dem Gehäuse verbunden, das Gehäuse fungiert also als ein Pol der Zelle. An die andere der Elektroden ist ein weiterer Ableiter angeformt. Dieser ist unmittelbar an einen Metallpol geschweißt, der durch ein Loch in dem Deckel nach außen geführt und gegenüber dem Deckel elektrisch isoliert ist.

Aus der WO 2017/215900 A1 sind zylindrische Rundzellen bekannt, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Stirnseite und Längsränder der Stromkollektoren der negativen Elektroden an der anderen Stirnseite aus dem Wickel austreten. Zur elektrischen Kontaktierung der Stromkollektoren weist die Zelle ein Kontaktblech auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle deutlich. Das Auftreten großer Ströme kann in der Folge sehr viel besser abgefangen und auch Wärme kann besser aus dem Wickel abgeführt werden.

### AUFGABE UND LÖSUNG

Vor diesem Hintergrund stellt sich die Erfindung die Aufgabe, eine verbesserte elektrochemische Energiespeicherzelle in Form einer Knopfzelle bereitzustellen, die eine besonders gute elektrische Anbindung der Elektroden bei einem wickelförmigen Elektroden-Separator-Verbund realisiert. Bei dieser Zelle soll insbesondere das elektrochemische Potential der Zelle möglichst optimal ausgenutzt werden.

Diese Aufgabe wird durch eine elektrochemische Energiespeicherzelle in Form einer Knopfzelle gelöst, wie sie sich aus dem Anspruch 1 ergibt. Weiterhin wird die Aufgabe durch ein Verfahren zur Herstellung einer solchen elektrochemischen Energiespeicherzelle gelöst. Dieses Verfahren ist Gegenstand des weiteren unabhängigen Anspruchs. Bevorzugte Ausgestaltungen der Knopfzelle bzw. des Herstellungsverfahrens ergeben sich aus den abhängigen Ansprüchen.

Die erfindungsgemäße elektrochemische Energiespeicherzelle ist in Form einer Knopfzelle ausgebildet und zeichnet sich stets durch die folgenden Merkmale a. bis j. aus:
a. Sie umfasst ein verschlossenes Gehäuse, das einen Innenraum luft- und flüssigkeitsdicht umschließt, und einen darin angeordneten Elektroden-Separator-Verbund,
b. das Gehäuse umfasst ein metallisches, becherförmig ausgebildetes Gehäuseteil, das einen Gehäusebecherboden, eine umlaufende Seitenwand und eine endständige Öffnung umfasst, wobei der Gehäusebecherboden und die umlaufenden Seitenwand jeweils eine in den Innenraum weisende Innenseite sowie eine Außenseite aufweisen,
c. das Gehäuse umfasst einen Deckel, der die endständige Öffnung des becherförmig ausgebildeten Gehäuseteils verschließt, wobei der Deckel eine in den Innenraum weisende Innenseite sowie eine Außenseite aufweist,
d. der Elektroden-Separator-Verbund liegt in Form eines zylindrischen Wickels vor, der eine erste flache endständige Stirnseite und eine zweite flache endständige Stirnseite sowie einen zwischen den Stirnseiten liegenden Wickelmantel aufweist,
e. der Elektroden-Separator-Verbund umfasst eine bandförmige Anode mit einem Anodenstromkollektor, der einen ersten Längsrand und einen dazu parallelen zweiten Längsrand aufweist,
f. der Elektroden-Separator-Verbund umfasst eine bandförmige Kathode mit einem Kathodenstromkollektor, der einen ersten Längsrand und einen dazu parallelen zweiten Längsrand aufweist,
g. der Anodenstromkollektor umfasst einen Hauptbereich, der mit einer Schicht aus einem negativen Elektrodenmaterial beladen ist, sowie einen freien Randstreifen, der sich entlang seines ersten Längsrands erstreckt und der nicht mit dem Elektrodenmaterial beladen ist,
   und/oder
   der Kathodenstromkollektor umfasst einen Hauptbereich, der mit einer Schicht aus einem positiven Elektrodenmaterial beladen ist, sowie einen freien Randstreifen, der sich entlang seines ersten Längsrands erstreckt und der nicht mit dem Elektrodenmaterial beladen ist,
h. die Anode und die Kathode sind innerhalb des Elektroden-Separator-Verbunds derart angeordnet, dass der erste Längsrand des Anodenstromkollektors aus der ersten endständigen Stirnseite und/oder der erste Längsrand des Kathodenstromkollektors aus der zweiten endständigen Stirnseite des Elektroden-Separator-Verbunds austritt.
i. in dem Gehäuse ist der Elektroden-Separator-Verbund axial ausgerichtet, so dass eine der Stirnseiten des Wickels dem Gehäusebecherboden und die andere der Stirnseiten dem Deckel zugewandt ist, und
j. der erste Längsrand des Anodenstromkollektors oder der erste Längsrand des Kathodenstromkollektors liegt unmittelbar an der Innenseite des Gehäusebecherbodens oder an der Innenseite des Deckels an.
   Erfindungsgemäß zeichnet sich die Knopfzelle besonders durch die folgenden Merkmale k. und l. aus:
k. Der Gehäusebecherboden und/oder der Deckel, an dessen Innenseite der erste Längsrand des Anodenstromkollektors oder des Kathodenstromkollektors anliegt, weist mindestens einen Bereich auf, in dem der Gehäusebecherboden oder der Deckel eine in den Innenraum weisende Deformation aufweist, oder in dem eine Erhebung des Gehäusebecherbodens oder des Deckels in den Innenraum ragt, und
l. der an der Innenseite des Gehäusebecherbodens oder des Deckels anliegende erste Längsrand des Anodenstromkollektors oder des Kathodenstromkollektors ist an die Deformation oder an die Erhebung geschweißt.

Der mindestens eine Bereich, in dem der Gehäusebecherboden oder der Deckel eine in den Innenraum weisende Deformation aufweist, oder in dem eine Erhebung des Gehäusebecherbodens oder des Deckels in den Innenraum ragt, wird im Folgenden auch als Erhebungs- und/oder Deformationsbereich bezeichnet. Das metallische, becherförmig ausgebildete Gehäuseteil wird im Folgenden auch als Gehäusebecher bezeichnet.

Der besondere Vorteil dieser erfindungsgemäßen Energiespeicherzelle bzw. dieser erfindungsgemäßen Knopfzelle liegt darin, dass mindestens eine der Elektroden unmittelbar an den Gehäusebecherboden und/oder den Deckel, also an den stirnseitigen Elementen des Gehäuses, kontaktiert ist. Im Gegensatz zu einer elektrischen Anbindung der Elektroden über jeweils einen separaten elektrischen Leiter, wie es beispielsweise bei den Knopfzellen gemäß der JP 2008-262825 A vorgesehen ist, senkt die direkte elektrische Anbindung der Längsränder der Stromkollektoren an die Stirnseiten des Gehäuses den Innenwiderstand der Zelle, so dass das Auftreten großer Ströme besser abgefangen werden kann. Außerdem kann Wärme besser aus dem wickelförmigen Elektroden-Separator-Verbund abgeführt werden.

Durch die weitere erfindungsgemäß vorgesehene Maßnahme, dass die elektrische Anbindung der Längsränder der Elektroden an den stirnseitigen Elementen des Gehäuses derart erfolgt, dass die Längsränder an nach innen ragenden Bereichen des Gehäusebecherbodens oder des Deckels angeschweißt sind, wird zum einen der Fertigungsprozess insbesondere im Hinblick auf eine Massenfertigung erleichtert. Zum anderen wird hierdurch eine besonders stabile und zuverlässige Verbindung zwischen dem jeweiligen stirnseitigen Element des Gehäuses und dem Längsrand der jeweiligen Elektroden ermöglicht.

Der Erhebungs- und/oder Deformationsbereich kann beispielsweise als Bereich ausgebildet sein, in dem die Dicke des Gehäusebecherbodens oder des Deckels erhöht ist, so dass die in den Innenraum weisende Erhebung resultiert. In einigen bevorzugten Ausführungsformen findet sich die Erhebung ausschließlich auf der Innenseite und ist von außen nicht zu erkennen. Besonders bevorzugt ist der Bereich allerdings als in den Innenraum weisende Deformation des Gehäusebecherbodens oder des Deckels ausgebildet. In einer bevorzugten Ausführungsform weisen der Gehäusebecherboden und/oder der Deckel im Bereich der Deformation gegenüber die Deformation umgebenden Bereichen keine erhöhte Dicke auf.

Insgesamt erlaubt der mindestens eine Erhebungs- und/oder Deformationsbereich eine besonders gute und einfach zu realisierende direkte elektrische Anbindung der jeweiligen ersten Längsränder der Stromkollektoren und damit der Elektroden.

Sowohl der Gehäusebecher als auch der Deckel bestehen bevorzugt aus einem Metallblech. Bei dem Metallblech kann es sich beispielsweise um ein Stahlblech oder ein Blech aus vernickeltem Stahl handeln. Es kommen auch Bleche aus Aluminium oder Kupfer in Frage.

Es ist besonders bevorzugt, dass der Deckel eine Wandstärke im Bereich von 0,05 mm bis 1,5 mm, bevorzugt von 0,1 mm bis 1,0 mm, weiter bevorzugt von 0,1 mm bis 0,5 mm, noch weiter bevorzugt von 0,15 mm bis 0,3 mm, alternativ im Bereich von 0,08 mm bis 0,2 mm, aufweist. Dies gilt insbesondere für den Bereich des Deckels, in dem der erste Längsrand des Anodenstromkollektors oder der erste Längsrand des Kathodenstromkollektors unmittelbar an der Innenseite anliegt.

Es ist weiterhin besonders bevorzugt, dass der Gehäusebecher eine Wandstärke im Bereich von 0,05 mm bis 1,5 mm, bevorzugt von 0,1 mm bis 1,0 mm, weiter bevorzugt von 0,1 mm bis 0,5 mm, noch weiter bevorzugt von 0,15 mm bis 0,3 mm, alternativ im Bereich von 0,08 mm bis 0,2 mm, aufweist. Dies gilt insbesondere für den Gehäusebecherboden.

In einer besonders bevorzugten Ausgestaltung der erfindungsgemäßen Energiespeicherzelle zeichnet sich diese durch mindestens eines der unmittelbar folgenden zusätzlichen Merkmale a. bis c. aus:
a. Der aus der ersten endständigen Stirnseite und/oder aus der zweiten endständigen Stirnseite des Elektroden-Separator-Verbunds austretende erste Längsrand, der an der Innenseite des Gehäusebecherbodens oder des Deckels unmittelbar anliegt, ist in mindestens einem Vertiefungsbereich deformiert.
b. Der mindestens eine Vertiefungsbereich korrespondiert zu dem mindestens einen Bereich, in dem der Gehäusebecherboden oder der Deckel die in den Innenraum weisende Deformation aufweist oder in dem die Erhebung des Gehäusebecherbodens oder des Deckels in den Innenraum ragt.
c. Die in den Innenraum weisende Deformation oder die Erhebung ist in den mindestens einen Vertiefungsbereich eingeschoben oder eingedrückt.

Vorzugsweise sind die unmittelbar vorgenannten Merkmale a. und b. oder, besonders bevorzugt, die unmittelbar vorgenannten Merkmale a., b. und c. in Kombination realisiert.

In diesen besonders bevorzugten und vorteilhaften Ausführungsformen weist also der wickelförmige Elektroden-Separator-Verbund an einer oder beiden Stirnseiten einen oder mehrere Vertiefungsbereiche auf, die zu dem mindestens einen Erhebungs- und/oder Deformationsbereich korrespondieren.

Unter dem Ausdruck "korrespondierend" ist in diesem Zusammenhang bevorzugt zu verstehen, dass die Erhebungs- und/oder Deformationsbereiche in die entsprechenden Vertiefungen an der oder den Stirnseiten des Wickels unmittelbar eingreifen bzw. direkt daran anliegen können.

Durch die zueinander korrespondierenden Bereiche wird der mechanische Kontakt zwischen den jeweiligen Abschnitten der Längsränder der Stromkollektoren und dem mindestens einen Erhebungs- und/oder Deformationsbereich optimiert, so dass eine zuverlässige Verschweißung der Stromkollektoren an die Gehäuseteile möglich ist. Außerdem können die zueinander korrespondierenden Bereiche eine korrekte Positionierung des Wickels in einem Gehäuseteil während der Fertigung erleichtern.

Der mindestens eine Vertiefungsbereich kann durch eine entsprechende Deformierung der hervorstehenden Längsränder der jeweiligen Stromkollektoren an der oder den Stirnseiten des Wickels ausgebildet werden. Bei der Deformierung des Längsrands des jeweiligen Stromkollektors wird der Längsrand bevorzugt einer gerichteten Umformung unterzogen und kann beispielsweise in eine definierte Richtung umgebogen oder gefalzt werden. Bei Untersuchungen der Erfinder hat sich gezeigt, dass durch eine solche Vorbehandlung bzw. Deformierung des Wickels an den entsprechenden Stellen des stirnseitigen Bereichs des Wickels der elektrische Kontakt zwischen dem Gehäusebecherboden oder dem Deckel und dem jeweiligen Stromkollektorrand deutlich verbessert werden kann und das Anschweißen erleichtert wird.

Im Hinblick auf die Ausgestaltung des mindestens einen Erhebungs- und/oder Deformationsbereichs ist in bevorzugten Ausführungsformen mindestens eines der unmittelbar folgenden zusätzlichen Merkmale a. und b. vorgesehen:
a. Die in den Innenraum weisende Deformation ist als Sicke ausgebildet,
b. die Sicke tritt auf einer Außenseite des Gehäusebecherbodens und/oder des Deckels als Vertiefung, insbesondere als längliche Vertiefung, und auf einer Innenseite des Gehäusebecherbodens und/oder des Deckels als Erhöhung, insbesondere als längliche Erhöhung, zu Tage.

Besonders bevorzugt sind die unmittelbar vorgenannten Merkmale a. und b. in Kombination miteinander realisiert.

Sicken können in sehr einfacher Weise beispielsweise durch einen Präge- oder einen sonstigen Umformvorgang hergestellt werden. Die Wandstärke des Gehäuseelements in dem Bereich der Sicke ist, wie oben bereits angedeutet, bevorzugt gleichbleibend. Weitere Einzelheiten hierzu werden nachfolgend im Zusammenhang mit dem Herstellungsverfahren der erfindungsgemäßen Zellen erläutert.

Besonders bevorzugt weist die in den Innenraum weisende Deformation, insbesondere die Sicke, eine Länge im Bereich von 2 mm bis 12 mm, bevorzugt von 2 mm bis 8 mm, und eine Breite im Bereich von 0,5 mm bis 4 mm, bevorzugt von 1 mm bis 3 mm, besonders bevorzugt von 1 mm bis 2,5 mm, auf. Dies gilt für alle hier offenbarten Ausführungsformen der Deformation.

Die absolute Länge und Breite der Deformation ist an die Dimensionen des erfindungsgemäßen Energiespeicherelements angepasst.

Bevorzugt ist die Deformation um einen Faktor im Bereich von 2 bis 20, besonders bevorzugt im Bereich von 4 bis 12, länger als sie breit ist.

In besonders bevorzugten Ausgestaltungen zeichnet sich die erfindungsgemäße Energiespeicherzelle durch mindestens eines der unmittelbar nachfolgenden zusätzlichen Merkmale a. und b. aus:
a. In dem mindestens einen Bereich, in dem der Gehäusebecherboden oder der Deckel die in den Innenraum weisende Deformation aufweist oder in dem die Erhebung des Gehäusebecherbodens oder des Deckels in den Innenraum ragt, befinden sich ein oder mehr Schweißspuren, insbesondere drei Schweißnähte.
b. In dem mindestens einen Bereich, in dem der Gehäusebecherboden oder der Deckel die in den Innenraum weisende Deformation aufweist oder in dem eine Erhebung des Gehäusebecherbodens oder des Deckels in den Innenraum ragt, befinden sich zwei oder mehr parallele Schweißnähte, insbesondere zwei oder drei parallele Schweißnähte.

Vorzugsweise sind die unmittelbar vorgenannten Merkmale a. und b. in Kombination miteinander realisiert.

Bei den Schweißspuren handelt es sich bevorzugt um Schweißnähte oder Schweißpunkte oder aber um eine Schweißlinse innerhalb des Gehäusebecherbodens oder des Deckels oder um Abdrücke von Schweißelektroden auf der Außenseite des Gehäusebecherbodens oder des Deckels.

Die Schweißnähte oder Schweißpunkte oder die Schweißlinse werden beim Anschweißen des ersten Längsrands des Anodenstromkollektors oder des Kathodenstromkollektors an den Gehäusebecherboden oder an den Deckel generiert, beispielsweise, indem ein starker Strom durch den Längsrand und den Gehäusebecherboden oder den Deckel geleitet wird, um den Längsrand und den Gehäusebecherboden oder den Deckel lokal so weit aufzuheizen, dass sie schmelzen. Die Schweißnähte oder Schweißpunkte sind bevorzugt auf der Außenseite des Gehäusebecherbodens oder Deckels sichtbar.

Besonders bevorzugt können die Schweißspuren, insbesondere die Schweißnähte oder Schweißpunkte, auch durch einen Laser erzeugt werden, der an Stelle des elektrischen Stroms zur Verschweißung eingesetzt werden kann.

Die Verschweißung erfolgt bevorzugt von außen. Im Falle des Lasers durchdringt dieser zuerst den Gehäusebecherboden oder den Deckel bevor er den Stromkollektor zum Schmelzen bringt. Im Fall einer Verschweißung mittels elektrischem Strom werden die benötigten Schweißelektroden bevorzugt auf der Außenseite des Gehäusebecherbodens oder des Deckels eingesetzt, um die Verschweißung zu bewirken. Dies ist besonders dann effizient, wenn die elektrische Leitfähigkeit des Stromkollektors höher ist als die elektrische Leitfähigkeit des Gehäusebecherbodens oder des Deckels.

Die Schweißnähte können durch auch eine Reihe von nebeneinander liegenden Schweißpunkten realisiert sein, die vorteilhafterweise eng beieinanderliegen. In anderen Ausgestaltungen kann/können auch eine durchgehende Schweißnaht oder mehrere durchgehende Schweißnähte vorgesehen sein.

In besonders bevorzugten Ausführungsformen zeichnet sich die erfindungsgemäße Energiespeicherzelle durch mindestens eines der unmittelbar folgenden zusätzlichen Merkmale a. bis c. aus:
a. Die in den Innenraum weisende Deformation ist als lineare Sicke ausgebildet.
b. Der Gehäusebecherboden und/oder der Deckel umfasst mehrere lineare Sicken, vorzugsweise drei lineare Sicken.
c. Die drei Sicken sind sternförmig angeordnet und schließen jeweils einen Winkel von 120° ein.

In besonders bevorzugter Weise sind die unmittelbar vorgenannten Merkmale a. und b. oder, besonders bevorzugt, die vorgenannten Merkmale a., b. und c., in Kombination miteinander realisiert.

Besonders bevorzugt sind die Schweißspuren, insbesondere die Schweißnähte oder die Schweißpunkte, in der Deformation, insbesondere in der Sicke, besonders bevorzugt am tiefsten Punkt der Sicke, angeordnet.

Prinzipiell kann der mindestens eine Erhebungs- und/oder Deformationsbereich auch in anderer Form realisiert sein und/oder es können beispielsweise weniger oder mehr als drei Sicken vorgesehen sein, beispielsweise können auch fünf oder sieben Sicken vorgesehen sein. Die konkrete Ausgestaltung und Geometrie des mindestens einen Erhebungs- und/oder Deformationsbereichs und insbesondere der Sicken wird zweckmäßigerweise an die Größe und Dimension der Knopfzelle bzw. der Energiespeicherzelle angepasst. Im Allgemeinen eignen sich für handelsübliche Bauformen von Knopfzellen drei oder mehr sternförmig angeordnete Sicken, die gleichmäßig über die Fläche der jeweiligen Stirnseite der Knopfzelle verteilt sind. Hierdurch kann eine gleichmäßige elektrische Anbindung der jeweiligen Elektroden an den stirnseitigen Elementen der Knopfzelle erreicht werden.

In bevorzugten Ausgestaltungen der erfindungsgemäßen Energiespeicherzelle bzw. der erfindungsgemäßen Knopfzelle zeichnet sich die Zelle dadurch aus, dass sie eine oder mehrere Sicken in dem Gehäusebecherboden und/oder dem Deckel aufweist, deren Tiefe in einem Bereich von 0,05 mm bis 0,60 mm, bevorzugt von 0,10 mm bis 0,50 mm, weiter bevorzugt von 0,20 mm bis 0,40 mm, liegt. Besonders bevorzugt ist eine Tiefe von ca. 0,30 mm.

In bevorzugten Ausführungsformen zeichnet sich die erfindungsgemäße Energiespeicherzelle bzw. die erfindungsgemäße Knopfzelle weiter dadurch aus, dass sie einen wickelförmigen Elektroden-Separator-Verbund aufweist, der im Bereich einer oder beider Stirnseiten einen oder mehrere der Vertiefungsbereiche aufweist. Deren Tiefe kann insbesondere in einem Bereich von 0,05 bis 0,45 mm, bevorzugt von 0,15 mm bis 0,35 mm, weiter bevorzugt von ca. 0,25 mm, liegen.

Bevorzugt entsprechen Anordnung und Dimension der Vertiefungsbereiche der Anordnung und Dimension der Erhebungs- und/oder Deformationsbereiche.

Die direkte und unmittelbare Anbindung der Längsränder der Stromkollektoren an das Gehäuse kann an einer oder an beiden Stirnseiten des als Wickel ausgebildeten Elektroden-Separator-Verbunds vorgesehen sein.

Wenn die erfindungsgemäße Anbindung der Elektroden nur an einer Stirnseite vorgesehen, muss grundsätzlich beispielsweise nur der Längsrand des Anoden oder nur der Längsrand des Kathodenstromkollektors auf einer Seite des wickelförmigen Elektroden-Separator-Verbunds einen freien Randstreifen aufweisen, der aus der entsprechenden Stirnseite des Elektroden-Separator-Verbunds austritt. Die andere Elektrode kann beispielsweise in an sich bekannter Weise mittels eines separaten Ableiters elektrisch kontaktiert sein.

Demgemäß ist in einer ersten grundsätzlichen Ausführungsform der erfindungsgemäßen Energiespeicherzelle die beschriebene elektrische Anbindung der Elektroden mittels Anschweißung des ersten Stromkollektorrands an den mindestens eine Erhebungs- und/oder Deformationsbereich nur auf einer Seite des als Wickel ausgebildeten Elektroden-Separator-Verbunds realisiert. In dieser Ausführungsform zeichnet sich die Energiespeicherzelle insbesondere durch mindestens eines der unmittelbar nachfolgenden Merkmale a. bis d. aus:
a. Der erste Längsrand des Anodenstromkollektors oder der erste Längsrand des Kathodenstromkollektors liegt an der Innenseite des Gehäusebecherbodens oder an der Innenseite des Deckels an.
b. Der Gehäusebecherboden oder der Deckel weisen mindestens einen Bereich auf, in dem der Gehäusebecherboden oder der Deckel die in den Innenraum weisende Deformation aufweist oder in dem eine Erhebung des Gehäusebecherbodens oder des Deckels in den Innenraum ragt.
c. Der erste Längsrand des Anodenstromkollektors oder der erste Längsrand des Kathodenstromkollektors ist an die Deformation oder Erhebung geschweißt.
d. Der nicht an die Deformation oder Erhebung des Gehäusebecherbodens oder des Deckels geschweißte Stromkollektor ist über einen Ableiter, insbesondere einen streifenförmigen Ableiter, elektrisch mit einem der Gehäuseteile verbunden.

Vorzugsweise sind die unmittelbar vorgenannten Merkmale a., b. und c. in Kombination miteinander verwirklicht. In besonders bevorzugter Weise sind die unmittelbar vorgenannten Merkmale a. bis d. in Kombination miteinander realisiert.

In einer weiteren bevorzugten Ausführungsform der erfindungsgemäßen Energiespeicherzelle befindet sich die beschriebene elektrische Anbindung der Elektroden über ein Anschweißen der Längsränder der Elektrodenbänder unmittelbar an das Gehäuse auf beiden Seiten der Energiespeicherzelle. Entsprechend zeichnet sich die Energiespeicherzelle in bevorzugten Ausgestaltungen durch mindestens eines der unmittelbar nachfolgenden zusätzlichen Merkmale a. bis c. aus:
a. Der erste Längsrand des Anodenstromkollektors oder der erste Längsrand des Kathodenstromkollektors liegt an der Innenseite des Gehäusebecherbodens und der erste Längsrand des nicht an der Innenseite des Gehäusebecherbodens anliegenden Stromkollektors liegt an der Innenseite des Deckels an.
b. Sowohl der Gehäusebecherboden als auch der Deckel weisen jeweils mindestens einen Bereich auf, in dem sie eine in den Innenraum weisende Deformation aufweisen oder in dem eine Erhebung in den Innenraum ragt.
c. Der erste Längsrand des Anodenstromkollektors und der erste Längsrand des Kathodenstromkollektors sind jeweils an eine Deformation oder eine Erhebung geschweißt.

Vorzugsweise sind die unmittelbar vorgenannten Merkmale a., b. und c. in Kombination realisiert.

Das Gehäuse der erfindungsgemäßen Energiespeicherzelle kann, abgesehen von den beschriebenen erfindungsgemäßen Merkmalen, wie bei herkömmlichen Knopfzellen realisiert sein.

Beispielsweise können im Hinblick auf die Ausbildung des Gehäuses die unmittelbar folgenden Merkmale a. und b. vorgesehen sein:
a. Der Deckel ist wie der Gehäusebecher becherförmig ausgebildet und weist einen Deckelboden, eine umlaufende Seitenwand und einen Öffnungsrand auf, wobei der Deckel mit dem Öffnungsrand voran in den Gehäusebecher eingeschoben ist.
b. Der Gehäusebecher und der Deckel sind durch eine ringförmige, elektrisch isolierende Dichtung voneinander getrennt.

Vorzugsweise sind die unmittelbar vorgenannten Merkmale a. und b. in Kombination miteinander realisiert.

In diesen Fällen ist es bevorzugt, dass, wenn der Deckel den mindestens einen Bereich, in dem er die in den Innenraum weisende Deformation aufweist oder in dem eine Erhebung des Deckels in den Innenraum des Gehäuses ragt, aufweist, dieser Bereich Teil des Deckelbodens ist.

Die ringförmige Dichtung kann aus einem zur Abdichtung elektrochemischer Zellen üblicherweise verwendeten Kunststoff bestehen, beispielsweise aus Polyamid oder einem Polyetherketon.

In einer anderen Ausgestaltung des Gehäuses der erfindungsgemäßen Energiespeicherzelle kann mindestens eines der unmittelbar folgenden Merkmale a. bis d. realisiert sein:
a. Der Deckel ist eine Scheibe, die in die endständige Öffnung des becherförmig ausgebildeten Gehäuseteils eingesetzt ist.
b. Die Scheibe ist in die Öffnung des becherförmig ausgebildeten Gehäuseteils eingeschweißt.
c. Durch die Scheibe ist ein elektrischer Pol geführt, der gegen die Scheibe elektrisch isoliert und der mit einer der Elektroden elektrisch verbunden ist.

Vorzugsweise sind die unmittelbar vorgenannten Merkmale a., b. und c. in Kombination miteinander verwirklicht.

Bei der erfindungsgemäßen Energiespeicherzelle handelt es sich vorzugsweise um eine Lithium-lonen-Zelle. Bei den Elektrodenmaterialien, mit denen die Stromkollektoren beladen sind, handelt es sich entsprechend bevorzugt um übliche Elektrodenmaterialien für Lithium-lonen-Zelle. Bevorzugt umfasst die Energiespeicherzelle einen für Lithium-lonen-Zellen üblichen Elektrolyten.

Innerhalb des Elektroden-Separator-Verbunds sind die Anode und die Kathode durch mindestens einen Separator voneinander getrennt. Der Separator ist bevorzugt bandförmig ausgebildet. Er kann beispielsweise aus einer mikroporösen Kunststofffolie oder aus einem Vlies bestehen.

In einigen Ausführungsformen können die Elektroden in dem Elektroden-Separator-Verbund auch über eine Schicht aus einem Festelektrolyten miteinander verbunden sein. Diese Schicht dient dann auch als Separator. Ein flüssiger Elektrolyt ist in diesen Fällen dann nicht zwingend erforderlich.

Der Gehäusebecherboden der erfindungsgemäßen Energiespeicherzelle ist bevorzugt für eine Kontaktierung der Anode vorgesehen. Der Anodenstromkollektor besteht bevorzugt aus Kuper oder einer Kupferlegierung, insbesondere aus Kupferfolie. Der Kathodenstromkollektor besteht bevorzugt aus Aluminium oder einer Aluminiumlegierung, insbesondere aus einer Aluminiumfolie.

Das erfindungsgemäße Energiespeicherelement weist bevorzugt eine maximale Höhe ≤ 1,5 cm und einen maximalen Durchmesser ≤ 2,5 cm auf.

Die Erfindung umfasst weiterhin ein Verfahren zur Herstellung einer elektrochemischen Energiespeicherzelle in Form einer Knopfzelle, insbesondere in Form einer Knopfzelle mit den oben beschriebenen Merkmalen. Dieses Verfahren umfasst stets die folgenden Schritte:
a. Bereitstellung eines metallischen, becherförmig ausgebildeten Gehäuseteils, das einen Gehäusebecherboden, eine umlaufende Seitenwand und eine endständige Öffnung umfasst, wobei der Gehäusebecherboden und die umlaufende Seitenwand jeweils eine Innenseite und eine Außenseite aufweisen,
b. Bereitstellung eines Deckels, wobei der Deckel eine Innenseite und eine Außenseite aufweist,
c. Bereitstellung eines Elektroden-Separator-Verbunds in Form eines zylindrischen Wickels, der eine erste flache endständige Stirnseite und eine zweite flache endständige Stirnseite sowie einen zwischen den Stirnseiten liegenden Wickelmantel aufweist, wobei
   i. der Elektroden-Separator-Verbund eine bandförmige Kathode mit einem Kathodenstromkollektor, der einen ersten Längsrand und einen dazu parallelen zweiten Längsrand aufweist, umfasst,
   ii. der Elektroden-Separator-Verbund eine bandförmige Anode mit einem Anodenstromkollektor, der einen ersten Längsrand und einen dazu parallelen zweiten Längsrand aufweist, umfasst,
   iii. der Anodenstromkollektor einen Hauptbereich umfasst, der mit einer Schicht aus negativem Elektrodenmaterial beladen ist, sowie einen freien Randstreifen, der sich entlang seines ersten Längsrands erstreckt und der nicht mit dem Elektrodenmaterial beladen ist,
      und/oder
      der Kathodenstromkollektor einen Hauptbereich umfasst, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist, und
   iiii. die Anode und die Kathode innerhalb des Elektroden-Separator-Verbunds derart angeordnet sind, dass der erste Längsrand des Anodenstromkollektors aus der ersten flachen endständigen Stirnseite und/oder der erste Längsrand des Kathodenstromkollektors aus der zweiten flachen endständigen Stirnseite des Elektroden-Separator-Verbunds austritt,
d. Einbringen des Elektroden-Separator-Verbunds in das becherförmige Gehäuseteil, so dass der Wickel axial in dem zu bildenden Gehäuse ausgerichtet ist und eine der Stirnseiten des Wickels dem Gehäusebecherboden zugewandt ist und der erste Längsrand des Anodenstromkollektors oder der erste Längsrand des Kathodenstromkollektors an der Innenseite des Gehäusebecherbodens oder an der Innenseite des Deckels anliegt, und
e. Verschließen des becherförmigen Gehäuseteils unter Verwendung des Deckels sowie gegebenenfalls einer ringförmigen, elektrisch isolierenden Dichtung zur Ausbildung eines luft- und flüssigkeitsdicht verschlossenen Gehäuses mit einem Innenraum, in dem der Elektroden-Separator-Verbund angeordnet ist.
   Besonders zeichnet sich das Verfahren durch die folgenden Merkmale aus:
f. In den Gehäusebecherboden und/oder in den Deckel wird mindestens eine Deformation eingebracht, die bei verschlossenem Gehäuse in den Innenraum weist,
   oder
   der Gehäusebecherboden des bereitgestellten oder der bereitgestellte Deckel weisen mindestens eine bei verschlossenem Gehäuse in den Innenraum ragende Erhebung auf.
g. Der an der Innenseite des Gehäusebecherbodens oder an der Innenseite des Deckels anliegende erste Längsrand des Anodenstromkollektors oder des Kathodenstromkollektors wird an die Deformation oder an die Erhebung geschweißt.

Der Deckel und der Gehäuseboden des becherförmig ausgebildeten Gehäuseteils können bereits vor Schritt a. und b. mit der mindestens einen Deformation oder der mindestens einen Erhebung versehen werden oder aus einem Blechmaterial hergestellt werden, das die mindestens eine Deformation oder die mindestens eine Erhebung bereits aufweist. Es ist aber auch möglich, die Deformation erst später in den Deckel oder Boden einzubringen, beispielsweise vor Schritt d. Das Einbringen der Deformation erfolgt bevorzugt durch einen Prägevorgang oder durch eine übliche Umformung, die in bevorzugter Weise in den Prozess der Herstellung des Deckels oder des becherförmig ausgebildeten Gehäuseteils eingebunden werden kann.

Sowohl der Deckel als auch das becherförmig ausgebildete Gehäuseteil sowie die Erhebung, die Deformation, der Elektroden-Separator-Verbund und auch die beim Schweißen entstehenden Schweißspuren wurden im Zusammenhang mit der elektrochemische Energiespeicherzelle bereits beschrieben. Auf die entsprechenden Ausführungen wird hiermit Bezug genommen.

Ebenso Bezug genommen wird auf die im Zusammenhang mit der erfindungsgemäßen Energiespeicherzelle beschriebenen bevorzugten Ausführungsformen, etwa den Vertiefungsbereich, der zu der Deformation oder der Erhebung korrespondiert. Der Vertiefungsbereich kann beispielsweise durch Rollierung gebildet werden.

Auch das Anschweißen kann je nach konkreter Ausgestaltung der Knopfzelle und je nach konkreter Ausgestaltung des Herstellungsverfahrens an verschiedenen Punkten des Verfahrens erfolgen. Beispielsweise kann der wickelförmige Elektroden-Separator-Verbund zunächst in das becherförmige Gehäuseteil eingebracht werden. Dann kann die Verschweißung des jeweiligen Längsrands der Elektrode im Bereich des Gehäusebecherbodens erfolgen, bevor der Gehäusebecher mit dem Deckel verschlossen wird.

Das Anschweißen kann aber auch nach dem Verschließen des Gehäuses erfolgen, wobei dann eine Verschweißung von außen erforderlich ist. Eine Verschweißung von außen kann sowohl durch Widerstandsschweißen als auch durch Laserschweißen bewirkt werden.

Weitere Merkmale und Vorteile der Erfindung ergeben sich aus der nachfolgenden Beschreibung von bevorzugten Ausführungsbeispielen in Verbindung mit den Zeichnungen. Die einzelnen Merkmale können dabei jeweils für sich oder in Kombination miteinander verwirklicht sein.

### KURZBESCHREIBUNG DER ZEICHNUNGEN

In den Zeichnungen zeigen schematisch:
- Fig. 1: Eine Ausführungsform einer erfindungsgemäßen Knopfzelle (perspektivische Ansicht);
- Fig. 2: Schnittansicht einer Knopfzelle mit Sicken wie bei der Knopfzelle gemäß Fig. 1;
- Fig. 3: Gehäuse einer weiteren Ausführungsform einer erfindungsgemäßen Knopfzelle (perspektivische Ansicht);
- Fig. 4: Schnittansicht einer Knopfzelle mit Sicken sowie einer Poldurchführung wie bei der Knopfzelle in Fig. 2;
- Fig. 5A: fotografische Ansicht des Gehäusebecherbodens einer erfindungsgemäßen Energiespeicherzelle;
- Fig. 5B: fotografische Ansicht des stirnseitigen Bereichs eines wickelförmigen Elektroden-Separator-Verbunds gemäß einer bevorzugten Ausführungsform der Erfindung;
- Fig. 6A: schematische Ansicht eines Gehäusebecherbodens einer erfindungsgemäßen Energiespeicherzelle mit drei Sicken und mit Andeutung von Schweißnähten in den Sicken;
- Fig. 6B: mikroskopische Aufnahme einer Sicke in einem Gehäusebecherboden mit drei Schweißnähten; und
- Fig. 6C: mikroskopische Aufnahme eines Vertiefungsbereichs.

### BESCHREIBUNG BEVORZUGTER AUSFÜHRUNGSBEISPIELE

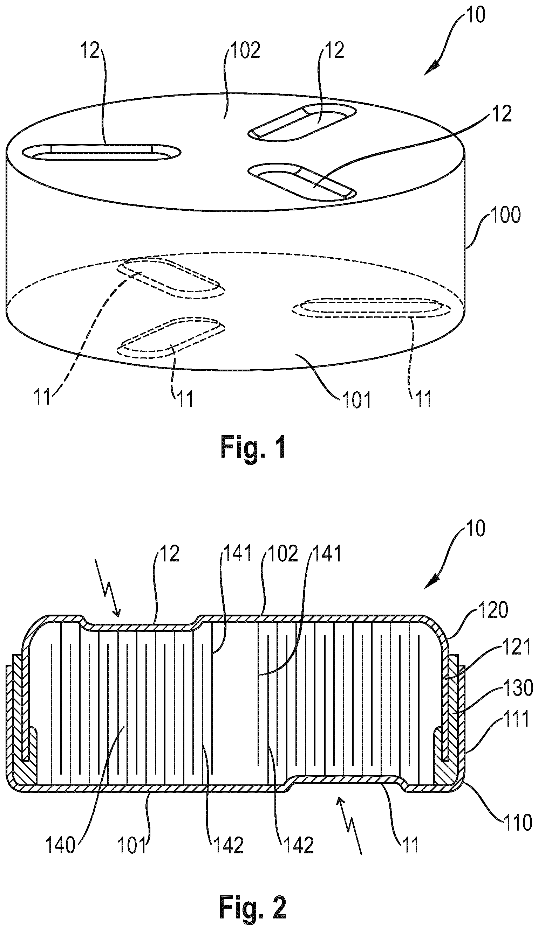

**Fig. 1** zeigt eine beispielhafte Ausführungsform einer erfindungsgemäßen Energiespeicherzelle in Form einer Knopfzelle 10, wobei der Schwerpunkt der Darstellung hier auf dem Gehäuse 100 liegt und das Innenleben der Zelle daher nicht dargestellt ist. Das zylindrische Gehäuse 100 weist einen Gehäusebecherboden 101 und einen Deckelboden 102 auf. In dieser Ausführungsform weisen der Gehäusebecherboden 101 und der Deckelboden 102 jeweils drei in den Innenraum der Zelle weisende Deformationen 11, 12 in sternförmiger Anordnung auf. Diese Deformationen 11, 12 sind als Sicken ausgebildet, die auf der Außenseite des Gehäusebecherbodens 101 bzw. des Deckelbodens 102 als längliche Vertiefungen und auf der Innenseite des Gehäusebecherbodens 101 bzw. des Deckelbodens 102 als längliche Erhöhungen zutage treten. Im Inneren des Gehäuses 100 sind (hier nicht dargestellt) die Längsränder der jeweiligen Stromkollektoren, die aus den stirnseitigen Bereichen des hier nicht gezeigten wickelförmigen Elektroden-Separator-Verbunds herausragen, mit der Innenseite des Gehäuses verschweißt.

**Fig. 2** zeigt eine Schnittansicht einer Knopfzelle mit Sicken wie bei der Knopfzelle gemäß Fig. 1, wobei der Schnitt durch eine der Sicken 11 im Gehäusebecherboden und durch eine der Sicken 12 im Deckelboden 102 gelegt ist.

Das Gehäuse der Zelle 10 umfasst dabei ein metallisches, becherförmig ausgebildetes Gehäuseteil 110 mit dem Gehäusebecherboden 101 und einer umlaufenden Seitenwand 111, deren endständiger Rand eine endständige Öffnung definiert. Weiterhin umfasst das Gehäuse einen metallischen, becherförmigen Deckel 120 mit dem Deckelboden 102 und einer umlaufenden Seitenwand 121. Der Deckel 120 ist in das Gehäuseteil 110 eingeschoben, wobei die jeweiligen umlaufenden Seitenwände 111 und 121 und damit auch die Gehäuseteile 110 und 120 durch eine Dichtung 130 elektrisch voneinander isoliert sind.

Im Inneren des so gebildeten Gehäuses der Knopfzelle 10 befindet sich der schematisch gezeichnete wickelförmige Elektroden-Separator-Verbund 140. Der Elektroden-Separator-Verbund 140 wird von einer bandförmigen Anode 142 und einer bandförmigen Kathode 141 gebildet. In dem Elektrodenwickel bzw. dem Elektroden-Separator-Verbund 140 sind die Anode 142 und die Kathode 141 durch einen hier nicht gezeigten bandförmigen Separator voneinander getrennt. Die Anode 142 und die Kathode 141 werden jeweils von einem Stromkollektor gebildet, der mit Elektrodenmaterial (ebenfalls nicht gezeigt) beschichtet ist. In dieser Ausführungsform weisen sowohl die Anode 142 als auch die Kathode 141 bzw. deren Stromkollektoren jeweils einen ersten Längsrand auf, der nicht mit dem Elektrodenmaterial beschichtet ist. Der freie erste Längsrand der Kathode 141 ragt aus der in dieser Darstellung gezeigten oberen Stirnseite des wickelförmigen Elektroden-Separator-Verbunds 140 heraus. Der freie erste Längsrand der Anode 142 ragt auf der unteren Stirnseite des Elektroden-Separator-Verbunds 140 heraus. Die elektrische Kontaktierung der Elektroden mit dem Gehäusebecherboden 101 bzw. mit dem Deckelboden 102 erfolgt über diese freien Längsränder der Stromkollektoren, indem die an der Innenseite des Gehäusebecherbodens 101 bzw. an der Innenseite des Deckelbodens 102 anliegenden freien Randstreifen bzw. ersten Längsränder der Stromkollektoren an die in den Innenraum weisenden Erhöhungen 11 des Gehäusebecherbodens 101 bzw. an die in den Innenraum weisenden Erhöhungen 12 des Deckelbodens 102 geschweißt sind. Diese Der Schweißbereich ist in dieser Darstellung durch Pfeile angedeutet.

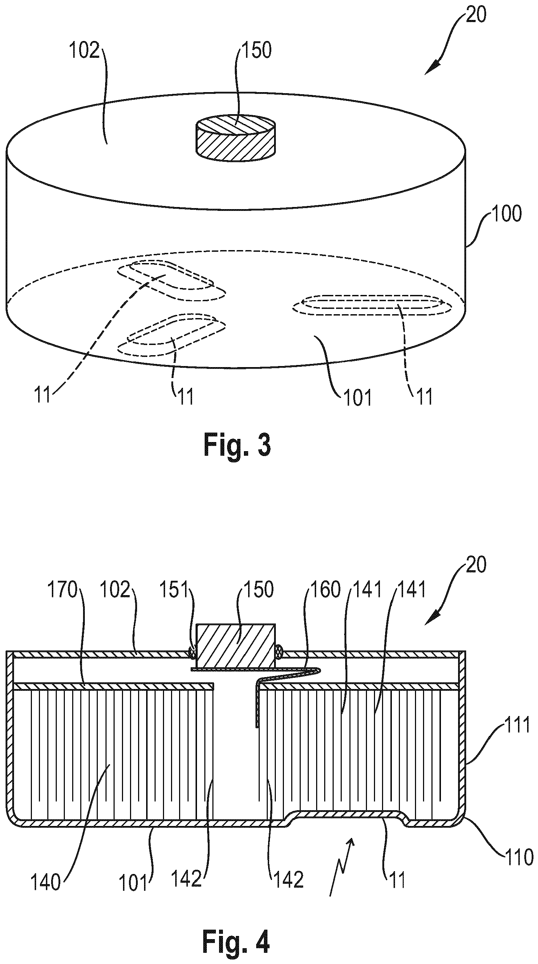

**Fig. 3** zeigt eine weitere Ausführungsform einer erfindungsgemäßen Knopfzelle 20, wobei wie in Fig. 1 der Schwerpunkt der Darstellung auf dem Gehäuse 100 liegt und das Innenleben der Zelle ebenfalls nicht dargestellt ist. In diesem Ausführungsbeispiel ist nur der metallische Gehäusebecherboden 101 mit drei Sicken 11 versehen. Im Bereich des Deckelbodens 102 der Knopfzelle 20 ist dagegen ein Pol 150 vorgesehen, der in diesem Ausführungsbeispiel den positiven Anschlusskontakt der Zelle 20 nach außen führt. Selbstverständlich kann die Polung der Zelle auch andersherum ausgestaltet sein.

**Fig. 4** zeigt eine Schnittansicht einer Knopfzelle mit Sicken und einem Pol 150 wie bei der Knopfzelle gemäß Fig. 3. Die Zelle 20 umfasst ein metallisches, becherförmiges Gehäuseteil 110 mit dem Gehäusebecherboden 101 und der umlaufenden Seitenwand 111. Der Deckel wird in diesem Ausführungsbeispiel von einer metallischen Scheibe 102 gebildet. Diese Scheibe ist in die endständige Öffnung des becherförmig ausgebildeten Gehäuseteils 110 eingesetzt und darin durch umlaufende Verschweißung fixiert. Der scheibenförmige Deckelboden 102 weist eine zentrale Durchbrechung auf, durch die der elektrische Pol 150 geführt ist. Der Pol 150 ist mittels einer Isolierung 151 gegenüber der Scheibe bzw. dem Deckelboden 102 elektrisch isoliert.

Die elektrische Anbindung der Kathode 141 erfolgt über einen streifenförmigen Ableiter 160, der die bandförmige Kathode 141 mit dem Pol 150 verbindet. In diesem Ausführungsbeispiel ist die oben dargestellte Stirnseite des Elektroden-Separator-Verbunds 140 gegenüber dem Deckelboden 102 und dem Ableiter 160 durch ein scheibenförmiges Isolierelement 170 isoliert. Hierbei kann es sich beispielsweise um eine Isolierscheibe oder um eine Folie handeln. Dieses Isolierelement 170 umfasst ein zentrales Loch, durch das der Ableiter 160 geführt ist, um die Kathode 141 im Inneren des Elektroden-Separator-Verbunds 140 kontaktieren zu können.

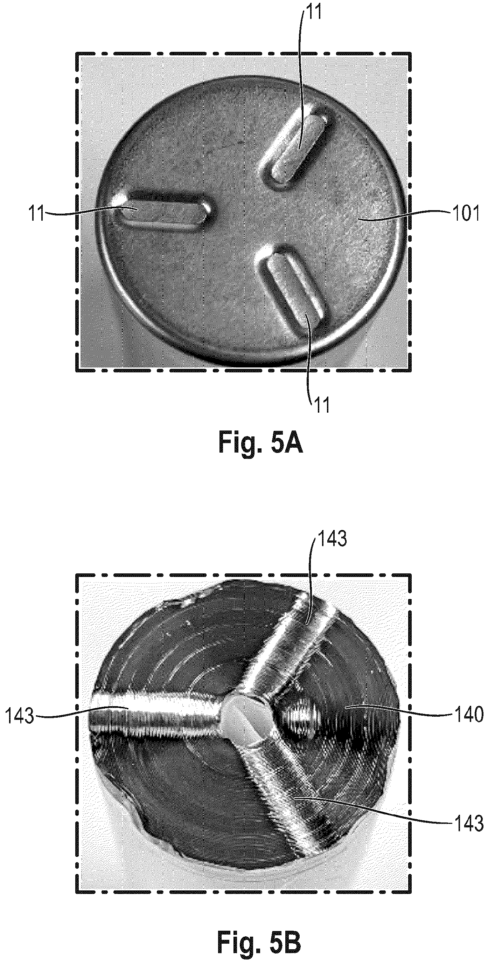

**Fig. 5A** zeigt eine fotografische Darstellung des Gehäusebecherbodens 101 einer erfindungsgemäßen Energiespeicherzelle. Gut zu erkennen sind die drei Sicken 11, die mit ihrer erhöhten Seite in den Innenraum der Zelle ragen. Im Inneren der Zelle ist in diesen Bereichen die Kontaktierung mit dem jeweiligen Längsrand des Stromkollektors der Anode oder der Kathode des Elektroden-Separator-Verbunds durch Verschweißung vorgesehen.

**Fig. 5B** zeigt eine fotografische Darstellung eines Elektroden-Separator-Verbunds 140 in Form eines Wickels, wobei die hier gezeigte Aufsicht auf eine der Stirnseiten des Wickels die zu den rinnenförmigen Vertiefungen 11 aus Fig. 5A korrespondierenden Vertiefungsbereiche 143 erkennen lässt. Diese Vertiefungsbereiche 143 können in einfacher Weise durch eine mechanische Deformierung der stirnseitigen Bereiche des Wickels hergestellt werden. Mittels dieser gegengleichen Ausformung des Wickels und des entsprechenden Gehäuseteils wird die Präzision und Zuverlässigkeit der elektrischen Verbindung durch Verschweißung in diesen Bereichen optimiert. Zudem kann mit Hilfe dieser Vertiefungsbereiche 143 die Positionierung des Wickels innerhalb des zu montierenden Gehäuses durch Ausrichtung anhand der vorspringenden Bereiche des Gehäusebecherbodens oder gegebenenfalls des Deckelbodens vereinfacht werden.

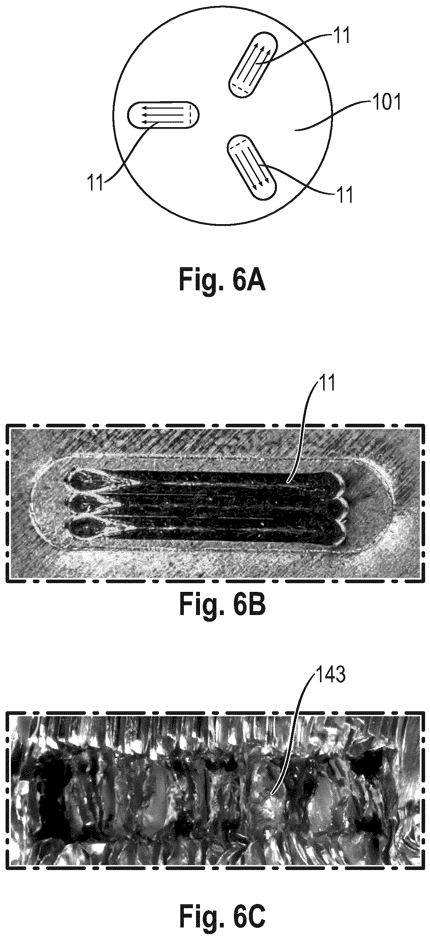

**Fig. 6A** illustriert eine Möglichkeit für die Verschweißung zur Anbindung der jeweiligen Längsränder der Stromkollektoren an den Gehäusebecherboden oder an den Deckelboden. Fig. 6A zeigt schematisch einen Gehäusebecherboden 101 mit drei rinnenförmigen Vertiefungen, die die in den Innenraum des zu bildenden Gehäuses vorspringende Bereiche 11 darstellen. In jedem der drei rinnenförmigen Vertiefungen 11 sind drei Pfeile zur Illustrierung der zu bildenden Schweißnähten dargestellt.

**Fig. 6B** zeigt eine mikroskopische Darstellung einer der rinnenförmigen Vertiefungen 11 mit den drei darin gebildeten Schweißnähten. **Fig. 6C** zeigt eine mikroskopische Darstellung des entsprechenden Gegenstücks in dem wickelförmigen Elektroden-Separator-Verbund als Vertiefungsbereich 143 in dem stirnseitigen Bereich des Wickels.

## Patentansprüche

1. Elektrochemische Energiespeicherzelle in Form einer Knopfzelle (10; 20) mit den Merkmalen
a. Sie umfasst ein verschlossenes Gehäuse (100), das einen Innenraum luft- und flüssigkeitsdicht umschließt, und einen darin angeordneten Elektroden-Separator-Verbund (140),
b. das Gehäuse umfasst ein metallisches, becherförmig ausgebildetes Gehäuseteil (110), das einen Gehäusebecherboden (101), eine umlaufende Seitenwand (111) und eine endständige Öffnung umfasst, wobei der Gehäusebecherboden (101) und die umlaufenden Seitenwand (111) jeweils eine in den Innenraum weisende Innenseite sowie eine Außenseite aufweisen,
c. das Gehäuse umfasst einen Deckel (120), der die endständige Öffnung des becherförmig ausgebildeten Gehäuseteils (110) verschließt, wobei der Deckel (120) eine in den Innenraum weisende Innenseite sowie eine Außenseite aufweist,
d. der Elektroden-Separator-Verbund (140) liegt in Form eines zylindrischen Wickels vor, der eine erste flache endständige Stirnseite und eine zweite flache endständige Stirnseite sowie einen zwischen den Stirnseiten liegenden Wickelmantel aufweist,
e. der Elektroden-Separator-Verbund (140) umfasst eine bandförmige Anode (142) mit einem Anodenstromkollektor, der einen ersten Längsrand und einen dazu parallelen zweiten Längsrand aufweist,
f. der Elektroden-Separator-Verbund (140) umfasst eine bandförmige Kathode (141) mit einem Kathodenstromkollektor, der einen ersten Längsrand und einen dazu parallelen zweiten Längsrand aufweist,
g. der Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem Elektrodenmaterial beladen ist,
und/oder
der Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist,
h. die Anode (142) und die Kathode (141) sind innerhalb des Elektroden-Separator-Verbunds (140) derart angeordnet, dass der erste Längsrand des Anodenstromkollektors aus der ersten endständigen Stirnseite und/oder der erste Längsrand des Kathodenstromkollektors aus der zweiten endständigen Stirnseite des Elektroden-Separator-Verbunds (140) austritt,
i. in dem Gehäuse (100) ist der Elektroden-Separator-Verbund (140) axial ausgerichtet, so dass eine der Stirnseiten des Wickels dem Gehäusebecherboden (101) und die andere der Stirnseiten dem Deckel (120) zugewandt ist, und
j. der erste Längsrand des Anodenstromkollektors oder der erste Längsrand des Kathodenstromkollektors liegt unmittelbar an der Innenseite des Gehäusebecherbodens (101) oder an der Innenseite des Deckels (120) an,
sowie den zusätzlichen Merkmalen
k. Der Gehäusebecherboden (101) und/oder der Deckel (120), an dessen Innenseite der erste Längsrand des Anodenstromkollektors oder des Kathodenstromkollektors anliegt, weist mindestens einen Bereich (11, 12) auf, in dem der Gehäusebecherboden oder der Deckel eine in den Innenraum weisende Deformation aufweist, oder in dem eine Erhebung des Gehäusebecherbodens oder des Deckels in den Innenraum ragt, und
l. der an der Innenseite des Gehäusebecherbodens (101) oder des Deckels (120) anliegende erste Längsrand des Anodenstromkollektors oder des Kathodenstromkollektors ist an die Deformation oder an die Erhebung geschweißt.

2. Energiespeicherzelle nach Anspruch 1 mit mindestens einem der folgenden zusätzlichen Merkmale:
a. Der aus der ersten endständigen Stirnseite und/oder aus der zweiten endständigen Stirnseite des Elektroden-Separator-Verbunds austretende erste Längsrand, der an der Innenseite des Gehäusebecherbodens (101) oder des Deckels (120) unmittelbar anliegt, ist in mindestens einem Vertiefungsbereich (143) deformiert.
b. Der mindestens eine Vertiefungsbereich (143) korrespondiert zu dem mindestens einen Bereich (11, 12), in dem der Gehäusebecherboden oder der Deckel eine in den Innenraum weisende Deformation aufweist oder in dem die Erhebung des Gehäusebecherbodens oder des Deckels in den Innenraum ragt.
c. Die in den Innenraum weisende Deformation oder die Erhebung ist in den mindestens einen Vertiefungsbereich (143) eingeschoben oder eingedrückt.

3. Energiespeicherzelle nach Anspruch 1 oder Anspruch 2 mit mindestens einem der folgenden zusätzlichen Merkmale:
a. Die in den Innenraum weisende Deformation ist als Sicke ausgebildet.
b. Die Sicke tritt auf einer Außenseite des Gehäusebecherbodens (101) und/oder des Deckels (120) als längliche Vertiefung und auf einer Innenseite des Gehäusebecherbodens (101) und/oder des Deckels (120) als längliche Erhöhung zu Tage.

4. Energiespeicherzelle nach einem der vorhergehenden Ansprüche mit mindestens einem der folgenden zusätzlichen Merkmale:
a. In dem mindestens einen Bereich (11, 12), in dem der Gehäusebecherboden oder der Deckel eine in den Innenraum weisende Deformation aufweist oder in dem eine Erhebung des Gehäusebecherbodens oder des Deckels in den Innenraum ragt, befinden sich ein oder mehr Schweißspuren, insbesondere drei Schweißnähte.
b. In dem mindestens einen Bereich (11, 12), in dem der Gehäusebecherboden oder der Deckel eine in den Innenraum weisende Deformation aufweist oder in dem eine Erhebung des Gehäusebecherbodens oder des Deckels in den Innenraum ragt, befinden sich zwei oder mehr parallele Schweißnähte, insbesondere drei parallele Schweißnähte.

5. Energiespeicherzelle nach einem der vorhergehenden Ansprüche mit mindestens einem der folgenden zusätzlichen Merkmale:
a. Die in den Innenraum weisende Deformation in dem Gehäusebecherboden oder dem Deckel ist als lineare Sicke ausgebildet.
b. Der Gehäusebecherboden und/oder der Deckel umfasst mehrere lineare Sicken, vorzugsweise drei lineare Sicken.
c. Die drei Sicken sind sternförmig angeordnet und schließen jeweils einen Winkel von 120° ein.

6. Energiespeicherzelle nach einem der vorhergehenden Ansprüche mit mindestens einem der folgenden zusätzlichen Merkmale:
a. Der erste Längsrand des Anodenstromkollektors oder der erste Längsrand des Kathodenstromkollektors liegt an der Innenseite des Gehäusebecherbodens (101) oder an der Innenseite des Deckels (120) an.
b. Der Gehäusebecherboden (101) oder der Deckel (120) weisen mindestens einen Bereich (11; 12) auf in dem der Gehäusebecherboden oder der Deckel eine in den Innenraum weisende Deformation aufweist oder in dem eine Erhebung des Gehäusebecherbodens oder des Deckels in den Innenraum ragt.
c. Der erste Längsrand des Anodenstromkollektors oder der erste Längsrand des Kathodenstromkollektors ist an die Deformation oder an die Erhebung geschweißt.
d. Der nicht an die Deformation oder die Erhebung geschweißte Stromkollektor ist über einen Ableiter (160), insbesondere einen streifenförmigen Ableiter, elektrisch mit einem der Gehäuseteile verbunden.

7. Energiespeicherzelle nach einem der Ansprüche 1 bis 5 mit mindestens einem der folgenden zusätzlichen Merkmale:
a. Der erste Längsrand des Anodenstromkollektors oder der erste Längsrand des Kathodenstromkollektors liegt an der Innenseite des Gehäusebecherbodens (101) und der erste Längsrand des nicht an der Innenseite des Gehäusebecherbodens anliegenden Stromkollektors liegt an der Innenseite des Deckels (120) an.
b. Sowohl der Gehäusebecherboden (101) als auch der Deckel (120) weisen jeweils mindestens einen Bereich (11, 12) auf, in dem sie eine in den Innenraum weisende Deformation aufweisen oder in dem eine Erhebung des Gehäusebecherbodens oder des Deckels in den Innenraum ragt.
c. Der erste Längsrand des Anodenstromkollektors und der erste Längsrand des Kathodenstromkollektors sind jeweils an eine Deformation oder Erhebung geschweißt.

8. Energiespeicherzelle nach einem der vorhergehenden Ansprüche mit mindestens einem der folgenden zusätzlichen Merkmale:
a. Der Deckel (120) ist wie der Gehäusebecher (120) becherförmig ausgebildet und weist einen Deckelboden (102), eine umlaufende Seitenwand (121) und einen Öffnungsrand auf, wobei der Deckel (120) mit dem Öffnungsrand voran in den Gehäusebecher (110) eingeschoben ist.
b. Der Gehäusebecher (110) und der Deckel (120) sind durch eine ringförmige, elektrisch isolierende Dichtung (130) voneinander getrennt.

9. Energiespeicherzelle nach einem der Ansprüche 1 bis 7 mit mindestens einem der folgenden zusätzlichen Merkmale:
a. Der Deckel (120) ist eine Scheibe (102), die in die endständige Öffnung des becherförmig ausgebildeten Gehäuseteils (110) eingesetzt ist.
b. Die Scheibe (102) ist in die Öffnung des becherförmig ausgebildeten Gehäuseteils (110) eingeschweißt.
c. Durch die Scheibe (102) ist ein elektrischer Pol (150) geführt, der gegen die Scheibe elektrisch isoliert und der mit einer der Elektroden elektrisch verbunden ist.

10. Verfahren zur Herstellung einer elektrochemischen Energiespeicherzelle in Form einer Knopfzelle (10; 20) gemäß einem der vorhergehenden Ansprüche mit den folgenden Schritten
a. Bereitstellung eines metallischen, becherförmig ausgebildeten Gehäuseteils (110), das einen Gehäusebecherboden (101), eine umlaufende Seitenwand (111) und eine endständige Öffnung umfasst, wobei der Gehäusebecherboden und die umlaufende Seitenwand jeweils eine Innenseite und eine Außenseite aufweisen,
b. Bereitstellung eines Deckels (120), wobei der Deckel eine Innenseite und eine Außenseite aufweist,
c. Bereitstellung eines Elektroden-Separator-Verbunds (140) in Form eines zylindrischen Wickels, der eine erste flache endständige Stirnseite und eine zweite flache endständige Stirnseite sowie einen zwischen den Stirnseiten liegenden Wickelmantel aufweist, wobei
i. der Elektroden-Separator-Verbund (140) eine bandförmige Kathode (141) mit einem Kathodenstromkollektor, der einen ersten Längsrand und einen dazu parallelen zweiten Längsrand aufweist, umfasst,
ii. der Elektroden-Separator-Verbund (140) eine bandförmige Anode (142) mit einem Anodenstromkollektor, der einen ersten Längsrand und einen dazu parallelen zweiten Längsrand aufweist, umfasst, und wobei
iii. der Anodenstromkollektor einen Hauptbereich umfasst, der mit einer Schicht aus negativem Elektrodenmaterial beladen ist, sowie einen freien Randstreifen, der sich entlang seines ersten Längsrands erstreckt und der nicht mit dem Elektrodenmaterial beladen ist,
und/oder
der Kathodenstromkollektor einen Hauptbereich umfasst, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist, und
iii. die Anode (142) und die Kathode (141) innerhalb des Elektroden-Separator-Verbunds (140) derart angeordnet sind, dass der erste Längsrand des Anodenstromkollektors aus der ersten flachen endständigen Stirnseite und/oder der erste Längsrand des Kathodenstromkollektors aus der zweiten flachen endständigen Stirnseite des Elektroden-Separator-Verbunds (140) austritt,
d. Einbringen des Elektroden-Separator-Verbunds (140) in das Gehäuseteil (120), so dass der Wickel axial in dem zu bildenden Gehäuse ausgerichtet ist und eine der Stirnseiten des Wickels dem Gehäusebecherboden (101) zugewandt ist und der erste Längsrand des Anodenstromkollektors oder der erste Längsrand des Kathodenstromkollektors an der Innenseite des Gehäusebecherbodens (101) oder an der Innenseite des Deckels (120) anliegt, und
e. Verschließen des becherförmigen Gehäuseteils (110) unter Verwendung des Deckels (120) sowie gegebenenfalls einer ringförmigen, elektrisch isolierenden Dichtung zur Ausbildung eines luft- und flüssigkeitsdicht verschlossenen Gehäuses mit einem Innenraum, in dem der Elektroden-Separator-Verbund (140) angeordnet ist, wobei,
sowie sich das Verfahren durch die folgenden Merkmale auszeichnet:
f. In den Gehäusebecherboden und/oder in den Deckel wird mindestens eine Deformation eingebracht, die bei verschlossenem Gehäuse in den Innenraum weist,
oder
der Gehäusebecherboden oder der bereitgestellte Deckel weisen mindestens eine bei verschlossenem Gehäuse in den Innenraum ragende Erhebung auf.
g. Der an der Innenseite des Gehäusebecherbodens (101) oder an der Innenseite des Deckels (120) anliegende erste Längsrand des Anodenstromkollektors oder des Kathodenstromkollektors wird an die Deformation oder an die Erhebung geschweißt.
